# EUROPEAN PATENT APPLICATION

(11) **EP 4 836 186 A1**
(43) Date of publication of application: **04.11.2026**
(21) Application number: 25751098.2
(22) Date of filing: 15.01.2025
(51) Int. Cl.: H01Q 1/36

(54) **WAVEGUIDE ANTENNA, DETECTION METHOD, AND RELATED DEVICE**

(30) Priority: 07.02.2024 CN 202410175656
(71) Applicant: Yinwang Intelligent Technologies Co., Ltd., Shenzhen, Guangdong 518110 (CN)
(72) Inventor: ZHANG, Zhiwei, Shenzhen, Guangdong 518129 (CN); XU, Mingxia, Shenzhen, Guangdong 518129 (CN)
(74) Representative: MERH-IP Matias Erny Reichl Hoffmann Patentanwälte PartG mbB
(86) International application number: PCT/CN2025/072403
(87) International publication number: WO 2025/167496

(57) **Abstract**

A waveguide antenna, a detection method, and a related apparatus are disclosed. The waveguide antenna includes a waveguide cavity, a feed port, and a first radiation port. The waveguide antenna is configured to operate in at least two operating frequency ranges. A signal input from the feed port is transmitted through the waveguide cavity and radiated through the first radiation port. Radiation energy of the first radiation port varies in different operating frequency ranges. Therefore, the radiation energy of the first radiation port can be changed by changing the operating frequency range of the waveguide antenna, to implement different detection ranges. In this way, the waveguide antenna of a same structure can operate in different operating frequency ranges to meet detection requirements in different application scenarios, eliminating the need to design different antenna structures to meet the detection requirements in different application scenarios, which reduces complexity and costs of a hardware structure.

## Description

This application claims priority to Chinese Patent Application No. 202410175656.0, filed with the China National Intellectual Property Administration on February 7, 2024 and entitled "WAVEGUIDE ANTENNA, DETECTION METHOD, AND RELATED APPARATUS", which is incorporated herein by reference in its entirety.

### TECHNICAL FIELD

This application relates to the field of millimeter-wave radar technologies, and in particular, to a waveguide antenna, a detection method, and a related apparatus.

### BACKGROUND

Waveguide antennas are widely used in millimeter-wave radars due to their high gains. The millimeter-wave radar is one of core sensors for assisted driving, and an antenna in the millimeter-wave radar is one of key elements that determine a detection capability of the millimeter-wave radar. Different application scenarios (for example, a driving mode and a parking mode) impose different requirements on technical specifications of the antenna in the millimeter-wave radar. For example, compared with the driving mode, the parking mode requires a larger vertical angle measurement range.

However, a current waveguide antenna cannot meet detection requirements in different application scenarios.

### SUMMARY

Embodiments of this application provide a waveguide antenna, a detection method, and a related apparatus, to meet detection requirements in different application scenarios.

According to a first aspect, an embodiment of this application provides a waveguide antenna. The waveguide antenna includes:
a waveguide cavity, a feed port, and a first radiation port.

The waveguide antenna is configured to operate in at least two operating frequency ranges.

A signal input from the feed port is transmitted through the waveguide cavity and radiated through the first radiation port.

Radiation energy of the first radiation port varies in different operating frequency ranges.

In this embodiment of this application, different operating frequency ranges can be configured for the waveguide antenna, so that the radiation energy of the first radiation port in the waveguide antenna varies in different operating frequency ranges. Therefore, the radiation energy of the first radiation port can be changed by changing the operating frequency range of the waveguide antenna, to implement different detection ranges. In this way, the waveguide antenna of a same structure can operate in different operating frequency ranges to meet detection requirements in different application scenarios, eliminating the need to design different antenna structures to meet the detection requirements in different application scenarios, which reduces complexity and costs of a hardware structure.

In a possible implementation, the waveguide antenna includes at least two first radiation ports that are symmetrical along the feed port.

In the foregoing implementation, the first radiation ports are symmetrically disposed, so that each pair of first radiation ports symmetrical along the feed port can be equivalent, and waveforms radiated by the first radiation ports can be symmetrical. This facilitates mirrored mounting of the antenna and reduces mounting difficulty.

In a possible implementation, the at least two operating frequency ranges correspond to different vertical angle measurement ranges.

The at least two operating frequency ranges include a first frequency range and a second frequency range, a maximum frequency in the first frequency range is less than a minimum frequency in the second frequency range, and a first vertical angle measurement range corresponding to the first frequency range is less than a second vertical angle measurement range corresponding to the second frequency range.

Because the radiation energy of the first radiation port in the waveguide antenna varies in different operating frequency ranges, the waveguide antenna has different characteristics when operating in different operating frequency ranges, and can adapt to different application scenarios. Therefore, different operating frequency ranges can correspond to different application scenarios (for example, a driving mode and a parking mode), to meet requirements in different vertical angle measurement ranges. In other words, different operating frequency ranges can correspond to different vertical angle measurement ranges.

In the foregoing implementation, when the waveguide antenna operates in different operating frequency ranges, different vertical angle measurement ranges can be implemented. Specifically, when the waveguide antenna operates in a low first frequency range, a small vertical angle measurement range can be implemented, and when the waveguide antenna operates in a high second frequency range, a large vertical angle measurement range can be implemented. In this way, the waveguide antenna of the same structure can operate in different operating frequency ranges to meet the requirements in different vertical angle measurement ranges.

In a possible implementation, the first frequency range corresponds to a driving mode, and the second frequency range corresponds to a parking mode.

In the foregoing implementation, when the waveguide antenna operates in the first frequency range, the small vertical angle measurement range can be implemented, so that a requirement of the driving mode on the vertical angle measurement range can be met. When the waveguide antenna operates in the second frequency range, the large vertical angle measurement range can be implemented, so that a requirement of the parking mode on the vertical angle measurement range can be met. In this way, the waveguide antenna of the same structure can operate in different operating frequency ranges to meet detection requirements in different assisted driving application scenarios.

In a possible implementation, radiation energy of the first radiation port in the first frequency range is higher than radiation energy of the first radiation port in the second frequency range, and a difference between the radiation energy of the first radiation port in the first frequency range and the radiation energy of the first radiation port in the second frequency range is greater than a first threshold.

The first threshold may be understood as a minimum radiation energy difference that is of the first radiation port in different operating frequency ranges and that is required to meet the requirements in different vertical angle measurement range when the waveguide antenna operates in different operating frequency ranges. Therefore, when the difference between the radiation energy of the first radiation port in different operating frequency ranges is greater than the first threshold, the requirements in different vertical angle measurement ranges can be met when the waveguide antenna operates in different operating frequency ranges.

In the foregoing implementation, the radiation energy of the first radiation port in the first frequency range is higher than the radiation energy of the first radiation port in the second frequency range, and the difference between the radiation energy of the first radiation port in the first frequency range and the radiation energy of the first radiation port in the second frequency range is greater than the first threshold, so that the small vertical angle measurement range can be implemented when the waveguide antenna operates in the first frequency range, and the large vertical angle measurement range can be implemented when the waveguide antenna operates in the second frequency range, to meet the requirements in different vertical angle measurement ranges.

In a possible implementation, a length of a resonant cavity of the first radiation port is related to the first frequency range.

The resonant cavity of the first radiation port is a resonant cavity required for an electromagnetic wave signal in the waveguide cavity to be effectively radiated through the first radiation port. To enable the first radiation port to effectively radiate the electromagnetic wave signal in the first frequency range, the length of the resonant cavity of the first radiation port can be designed based on the first frequency range, so that the length of the resonant cavity of the first radiation port is related to the first frequency range.

In the foregoing implementation, the length of the resonant cavity of the first radiation port is related to the first frequency range, so that the first radiation port can effectively radiate the electromagnetic wave signal in the first frequency range. This helps implement the small vertical angle measurement range when the waveguide antenna operates in the first frequency range.

In a possible implementation, the length of the resonant cavity is a waveguide propagation wavelength of a signal corresponding to an intermediate frequency in the first frequency range.

In the foregoing implementation, the length of the resonant cavity of the first radiation port can be designed based on the waveguide propagation wavelength of the signal corresponding to the intermediate frequency in the first frequency range, so that the first radiation port can effectively radiate the electromagnetic wave signal in the first frequency range. This helps implement the small vertical angle measurement range when the waveguide antenna operates in the first frequency range.

In a possible implementation, the waveguide antenna further includes a second radiation port, the second radiation port is located between the feed port and the first radiation port, and a difference between radiation energy of the second radiation port in the first frequency range and radiation energy of the second radiation port in the second frequency range is less than a second threshold.

The second threshold may be understood as a maximum radiation energy difference that is of the second radiation port in different operating frequency ranges and that is required to meet the requirements in different vertical angle measurement range when the waveguide antenna operates in different operating frequency ranges. Therefore, when the difference between the radiation energy of the second radiation port in different operating frequency ranges is less than the second threshold, the requirements in different vertical angle measurement ranges can be met when the waveguide antenna operates in different operating frequency ranges.

In the foregoing implementation, the radiation energy of the first radiation port in the first frequency range is higher than the radiation energy of the first radiation port in the second frequency range, the difference between the radiation energy of the first radiation port in the first frequency range and the radiation energy of the first radiation port in the second frequency range is greater than the first threshold, and the difference between the radiation energy of the second radiation port in the first frequency range and the radiation energy of the second radiation port in the second frequency range is less than the second threshold, so that the small vertical angle measurement range can be implemented when the waveguide antenna operates in the first frequency range, and the large vertical angle measurement range can be implemented when the waveguide antenna operates in the second frequency range, to meet the requirements in different vertical angle measurement ranges.

In a possible implementation, the waveguide antenna includes at least two second radiation ports that are symmetrical along the feed port.

In the foregoing implementation, the second radiation ports are designed to be symmetrical, so that each pair of second radiation ports symmetrical along the feed port can be equivalent. This facilitates the mirrored mounting of the antenna and reduces the mounting difficulty.

In a possible implementation, the waveguide antenna includes two second radiation ports that are symmetrical along the feed port, and a distance between the two second radiation ports is related to the second frequency range and the second vertical angle measurement range.

The distance between the two second radiation ports is a distance that is between the second radiation ports and that is required for an electromagnetic wave signal in the waveguide cavity to be effectively radiated through the second radiation ports. To enable the second radiation port to effectively radiate the electromagnetic wave signal in both the first frequency range and the second frequency range and implement the second vertical angle measurement range in the second frequency range, the distance between the two second radiation ports can be designed based on the second frequency range and the second vertical angle measurement range, so that the distance between the two second radiation ports is related to the second frequency range and the second vertical angle measurement range.

In the foregoing implementation, the distance between the two second radiation ports is related to the second frequency range and the second vertical angle measurement range, so that the second radiation port can effectively radiate the electromagnetic wave signal in both the first frequency range and the second frequency range. This helps implement the small vertical angle measurement range when the waveguide antenna operates in the first frequency range, and implement the large vertical angle measurement range when the waveguide antenna operates in the second frequency range.

In a possible implementation, the distance between the two second radiation ports satisfies the following condition: ${d}_{mm} \leq \frac{{λ}_{max}}{2 \times sin \frac{θ}{2}} ,$ where
dₘₘ indicates the distance between the two second radiation ports, λₘₐₓ indicates an air propagation wavelength of a signal corresponding to a maximum frequency in the second frequency range, and θ indicates the second vertical angle measurement range.

In the foregoing implementation, the distance between the two second radiation ports can be designed based on the air propagation wavelength of the signal corresponding to the maximum frequency in the second frequency range and the second vertical angle measurement range, so that the second radiation port can effectively radiate the electromagnetic wave signal in both the first frequency range and the second frequency range. This helps implement the small vertical angle measurement range when the waveguide antenna operates in the first frequency range, and implement the large vertical angle measurement range when the waveguide antenna operates in the second frequency range.

In a possible implementation, the waveguide antenna includes two first radiation ports that are symmetrical along the feed port, and a distance between the first radiation port and the adjacent second radiation port satisfies the following condition: ${d}_{mm} < {d}_{ms} < {D}_{f} ,$ where
dₘₛ indicates the distance between the first radiation port and the adjacent second radiation port, dₘₘ indicates the distance between the two second radiation ports, and D_{f} indicates the length of the resonant cavity of the first radiation port.

In the foregoing implementation, the distance between the first radiation port and the adjacent second radiation port can be designed based on the distance between the second radiation ports and the length of the resonant cavity of the first radiation port, so that the first radiation port can effectively radiate the electromagnetic wave signal in the first frequency range, but cannot effectively radiate the electromagnetic wave signal in the second frequency range. This helps implement the small vertical angle measurement range when the waveguide antenna operates in the first frequency range, and implement the large vertical angle measurement range when the waveguide antenna operates in the second frequency range.

In a possible implementation, a length of the waveguide cavity satisfies the following condition: ${L}_{wg} = {d}_{mm} + 2 \times {D}_{f} ,$ where
L_{wg} indicates the length of the waveguide cavity.

In the foregoing implementation, the length of the waveguide cavity can be designed based on the distance between the second radiation ports and the length of the resonant cavity of the first radiation port, so that the first radiation port can effectively radiate the electromagnetic wave signal in the first frequency range, but cannot effectively radiate the electromagnetic wave signal in the second frequency range, and the second radiation port can effectively radiate the electromagnetic wave signal in both the first frequency range and the second frequency range. This helps implement the small vertical angle measurement range when the waveguide antenna operates in the first frequency range, and implement the large vertical angle measurement range when the waveguide antenna operates in the second frequency range.

In a possible implementation, an area of the second radiation port is greater than or equal to an area of the first radiation port.

When the waveguide antenna operates in the first frequency range, both the first radiation port and the second radiation port can effectively radiate the electromagnetic wave signals, and radiation energy of the electromagnetic wave signal at the second radiation port is stronger than radiation energy of the electromagnetic wave signal at the first radiation port, so that the small vertical angle measurement range can be implemented. When the waveguide antenna operates in the second frequency range, the first radiation port cannot effectively radiate the electromagnetic wave signal, and the second radiation port can still radiate the strong electromagnetic wave signal, so that the large vertical angle measurement range can be implemented.

In the foregoing implementation, the area of the second radiation port is greater than or equal to the area of the first radiation port, so that the radiation energy of the second radiation port can be greater than the radiation energy of the first radiation port. This helps implement different vertical angle measurement ranges when the waveguide antenna operates in different operating frequency ranges.

According to a second aspect, an embodiment of this application provides a detection method. The detection method may be applied to a detection apparatus. The detection method includes:
transmitting a measurement signal through a waveguide antenna.

The waveguide antenna includes a waveguide cavity, a feed port, and a first radiation port, the waveguide antenna is configured to operate in at least two operating frequency ranges, the measurement signal is input from the feed port to the waveguide cavity, transmitted through the waveguide cavity, and radiated through the first radiation port, and radiation energy of the first radiation port varies in different operating frequency ranges.

In this embodiment of this application, different operating frequency ranges can be configured for the waveguide antenna, and different detection ranges are implemented by changing the operating frequency range of the waveguide antenna. In this way, the waveguide antenna of a same structure can operate in different operating frequency ranges to meet detection requirements in different application scenarios, eliminating the need to design different antenna structures to meet the detection requirements in different application scenarios, which reduces complexity and costs of a hardware structure.

In a possible implementation, the at least two operating frequency ranges correspond to different vertical angle measurement ranges.

The at least two operating frequency ranges include a first frequency range and a second frequency range, a maximum frequency in the first frequency range is less than a minimum frequency in the second frequency range, and a first vertical angle measurement range corresponding to the first frequency range is less than a second vertical angle measurement range corresponding to the second frequency range.

In the foregoing implementation, when the waveguide antenna operates in different operating frequency ranges, different vertical angle measurement ranges can be implemented. Specifically, when the waveguide antenna operates in a low first frequency range, a small vertical angle measurement range can be implemented, and when the waveguide antenna operates in a high second frequency range, a large vertical angle measurement range can be implemented. In this way, the waveguide antenna of the same structure can operate in different operating frequency ranges to meet requirements in different vertical angle measurement ranges.

In a possible implementation, before transmitting the measurement signal through the waveguide antenna, the method further includes:
receiving an instruction from a vehicle controller, where the instruction indicates a vehicle operating mode; and
transmitting the measurement signal through the waveguide antenna includes:
   when the vehicle operating mode is a driving mode, transmitting a measurement signal in the first frequency range through the waveguide antenna; or
   when the vehicle operating mode is a parking mode, transmitting a measurement signal in the second frequency range through the waveguide antenna.

In the foregoing implementation, the detection apparatus can determine the operating frequency range based on the instruction of the vehicle controller. When the instruction indicates the driving mode, the detection apparatus operates in the first frequency range, to implement the small vertical angle measurement range, so that a requirement of the driving mode on the vertical angle measurement range is met. When the instruction indicates the parking mode, the detection apparatus operates in the second frequency range, to implement the large vertical angle measurement range, so that a requirement of the parking mode on the vertical angle measurement range is met. In this way, detection requirements in different assisted driving application scenarios can be flexibly responded to.

In a possible implementation, the waveguide antenna operates in the first frequency range in a first time period, and operates in the second frequency range in a second time period, and the first time period and the second time period are two time periods that are periodically and alternately cyclic.

In the foregoing implementation, the detection apparatus can periodically switch the operating frequency range. When the detection apparatus operates in the first frequency range, the small vertical angle measurement range can be implemented. When the detection apparatus operates in the second frequency range, the large vertical angle measurement range can be implemented. In this way, detection can be actively performed in different vertical angle measurement ranges, to help improve comprehensiveness of detection.

According to a third aspect, an embodiment of this application provides a detection apparatus. The detection apparatus includes the waveguide antenna according to the first aspect or any one of the possible implementations of the first aspect. For example, the detection apparatus may be a chip, a millimeter-wave radar, or a millimeter-wave radar system.

According to a fourth aspect, an embodiment of this application provides a detection apparatus. The detection apparatus includes at least one processor and a communication interface. The communication interface is configured to provide instructions or data input and/or output for the at least one processor, the at least one processor is configured to perform the detection method according to the second aspect or any one of the possible implementations of the second aspect. For example, the detection apparatus may be a chip, a millimeter-wave radar, or a millimeter-wave radar system.

According to a fifth aspect, an embodiment of this application provides a terminal device. The terminal device includes the waveguide antenna according to the first aspect or any one of the possible implementations of the first aspect, or includes the detection apparatus according to the third aspect, or includes the detection apparatus according to the fourth aspect.

According to a sixth aspect, an embodiment of this application provides a vehicle. The vehicle includes the waveguide antenna according to the first aspect or any one of the possible implementations of the first aspect, or includes the detection apparatus according to the third aspect, or includes the detection apparatus according to the fourth aspect, or includes the terminal device according to the fifth aspect.

According to a seventh aspect, an embodiment of this application provides a computer-readable storage medium. The computer-readable storage medium stores a computer program or instructions, and when the computer program or the instructions are executed, the detection method according to the second aspect or any one of the possible implementations of the second aspect is implemented.

According to an eighth aspect, this application provides a computer program product. The computer program product includes a computer program or instructions, and when the computer program or the instructions are executed, the detection method according to the second aspect or any one of the possible implementations of the second aspect is implemented.

For beneficial effect of the third aspect to the eighth aspect, refer to descriptions of beneficial effect of the first aspect and the second aspect. Details are not described herein again.

### BRIEF DESCRIPTION OF DRAWINGS

To describe technical solutions in embodiments of this application more clearly, the following briefly describes accompanying drawings used in embodiments of this application.
FIG. 1 is a diagram of radar deployment according to an embodiment of this application;
FIG. 2 is a diagram of an architecture of a radar according to an embodiment of this application;
FIG. 3 is a diagram of a vertical angle measurement range in a driving mode according to an embodiment of this application;
FIG. 4 is a diagram of a vertical angle measurement range in a parking mode according to an embodiment of this application;
FIG. 5 is a diagram of a microstrip antenna;
FIG. 6 is a diagram of a waveguide antenna;
FIG. 7 is a diagram of a waveguide antenna according to an embodiment of this application;
FIG. 8 is a planar diagram of a waveguide antenna according to an embodiment of this application;
FIG. 9 is a diagram of comparison of vertical angle measurement ranges in a case in which a waveguide antenna operates in different operating frequency ranges according to an embodiment of this application;
FIG. 10 is a diagram of a structure of a detection apparatus according to an embodiment of this application;
FIG. 11 is a diagram of a structure of an antenna array according to an embodiment of this application;
FIG. 12 is a schematic flowchart of a detection method according to an embodiment of this application; and
FIG. 13 is a schematic flowchart of another detection method according to an embodiment of this application.

### DESCRIPTION OF EMBODIMENTS

To make objectives, technical solutions, and advantages of this application clearer, the following describes embodiments of this application with reference to accompanying drawings in embodiments of this application.

In this application, words such as "example" or "for example" indicate giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

In this application, terms "first", "second", and the like are intended to distinguish between different objects but do not describe a particular order. In addition, terms such as "include" and "have" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to the embodiment may be included in at least one embodiment of this application. The phrase shown in various positions in this specification may not necessarily refer to a same embodiment, and is not an independent or optional embodiment exclusive from another embodiment. A person skilled in the art may explicitly and implicitly understand that, in embodiments of this application, unless otherwise stated or there is a logical conflict, terms and/or descriptions in embodiments are consistent and may be mutually referenced, and technical features in different embodiments may be combined based on an internal logical relationship thereof, to form a new embodiment.

It should be understood that, in this application, "at least one" means one or more, and "a plurality of" means two or more. A term "and/or" is used to describe an association relationship between associated objects, and indicates that three relationships may exist. For example, "A and/or B" may indicate the following three cases: Only A exists, only B exists, and both A and B exist, where A and B may be singular or plural. A character "/" usually indicates an "or" relationship between the associated objects. "At least one of the following items (pieces)" or a similar expression thereof means any combination of the items, and includes a single item (piece) or any combination of a plurality of items (pieces). For example, at least one of a, b, or c may indicate a, b, c, a and b, a and c, b and c, or a, b, and c, where a, b, and c may be singular or plural.

As described in the background, different application scenarios (for example, a driving mode and a parking mode) impose different requirements on technical specifications of an antenna in a millimeter-wave radar. However, a current waveguide antenna cannot meet detection requirements in different application scenarios. Embodiments of this application provide a waveguide antenna, a detection method, and a related apparatus, and relate to the field of millimeter-wave radar technologies, to simultaneously meet detection requirements in different application scenarios.

To describe the solutions of this application more clearly, the following first describes some knowledge related to a radar.

The radar is a transliterated name of Radar in English, and is short for radio detection and ranging, namely, radio detection and ranging. The radar is used to discover a target and determine a spatial position of the target by using a radio method.

A detection medium of the radar is an electromagnetic wave, and the radar implements detection of a target, for example, ranging, speed measurement, or azimuth measurement, through transmission and receiving of the electromagnetic wave. The radar can implement ranging on the target based on time of flight of the electromagnetic wave. The time of flight is a transmit-receive time difference of the electromagnetic wave. The radar transmits an electromagnetic wave signal, receives an echo signal of the electromagnetic wave signal, and may implement ranging on the target based on a time difference between the received echo signal and the transmitted electromagnetic wave signal and a propagation speed of the electromagnetic wave. A distance between the radar and the target may be determined based on the following formula: s=c*t/2, where s is the distance of the target, t is time of flight, namely, time from transmission of the electromagnetic wave signal by the radar to receiving of the echo signal, and c is a speed of light.

The radar implements speed measurement on the target based on the Doppler effect (Doppler effect). A principle of the Doppler effect is as follows: When a vibration source like sound, light, and a radio wave moves relative to an observer at a relative speed, a frequency of vibration received by the observer is different from a frequency generated by the vibration source. When the electromagnetic wave transmitted by the radar moves relative to the detected target, a frequency of the echo signal is different from a frequency of the transmitted electromagnetic wave signal. When the target approaches an antenna of the radar, the frequency of the echo signal is higher than the frequency of the transmitted electromagnetic wave signal. When the target moves away from an antenna of the radar, the frequency of the echo signal is lower than the frequency of the transmitted electromagnetic wave signal. A frequency change caused by the Doppler effect is referred to as a Doppler frequency shift, which is proportional to the relative speed and inversely proportional to the frequency of vibration. Therefore, a frequency difference between the transmitted electromagnetic wave signal and the echo signal is detected, so that a moving speed of the target relative to the radar, namely, the relative speed of the target relative to the radar, can be measured.

The radar may measure an azimuth by using an amplitude method, a phase method, or the like. The amplitude method is used to measure an azimuth by using an amplitude value of an echo signal received through an antenna, and a change rule of the amplitude value depends on an antenna pattern and a scanning manner of the antenna. The phase method is used to measure an azimuth by using a phase difference between echo signals received through a plurality of antenna elements. For example, the radar receives, by using an antenna array, echo signals reflected by a same target, and calculates an azimuth of the target based on a phase difference of the echo signals.

A detection medium of a millimeter-wave radar is an electromagnetic wave in a specific wavelength range, for example, a microwave. Currently, a millimeter wave (millimeter wave) and a centimeter wave (for example, a centimeter wave in a 24 GHz frequency band) adjacent to the millimeter wave in wave bands are commonly used. The millimeter wave is an electromagnetic wave with a wavelength of 1 to 10 millimeters (mm), and a wavelength of an electromagnetic wave in the 24 GHz frequency band is slightly greater than 10 mm. Because a wavelength of the detection medium of the millimeter-wave radar is in an overlapped wavelength range of the microwave and a far infrared wave, the detection medium of the millimeter-wave radar has characteristics of two spectrums. According to a wave propagation theory, a higher frequency indicates a shorter wavelength, and higher resolution, while in this case, a loss in a propagation process is larger, and a transmission distance is shorter. On the contrary, a lower frequency indicates a longer wavelength, a stronger diffraction capability, and a longer transmission distance. Therefore, compared with the microwave, the detection medium of the millimeter-wave radar has high resolution, good directivity, a strong anti-interference capability, and good detection performance. Compared with infrared, the detection medium of the millimeter-wave radar has lower atmospheric attenuation, better penetration to smoke and dust, and is less affected by weather. Therefore, the millimeter-wave radar is increasingly widely used in a plurality of fields such as intelligent vehicles, uncrewed aerial vehicles, intelligent transportation, and industrial automation.

Based on a detection distance, the radar can be classified into a long range radar (long range radar, LRR), a mid/medium range radar (mid/medium range radar, MRR), and a short range radar (short range radar, SRR). The LRR has a high requirement on a detection distance, and has a low requirement on a width of a detection angular domain. The SRR has a low requirement on a detection distance, and has a high requirement on a width of a detection angular domain. Requirements of the MRR on a detection distance and a width of a detection angular domain may be understood as being between those of the LRR and those of the SRR. For example, the detection distance of the LRR may be greater than 200 meters, and the width of the angular domain may be ±15°; the detection distance of the MRR may be within 100 meters, and the width of the angular domain may be ±45°; and the detection distance of the SRR may be within 60 meters, and the width of the angular domain may be ±80°. During use, different types of radars may be mounted in different positions of a vehicle body based on a function requirement of autonomous driving and a use status of another sensor. A quantity of radars and a type of the radar may be selected based on a requirement.

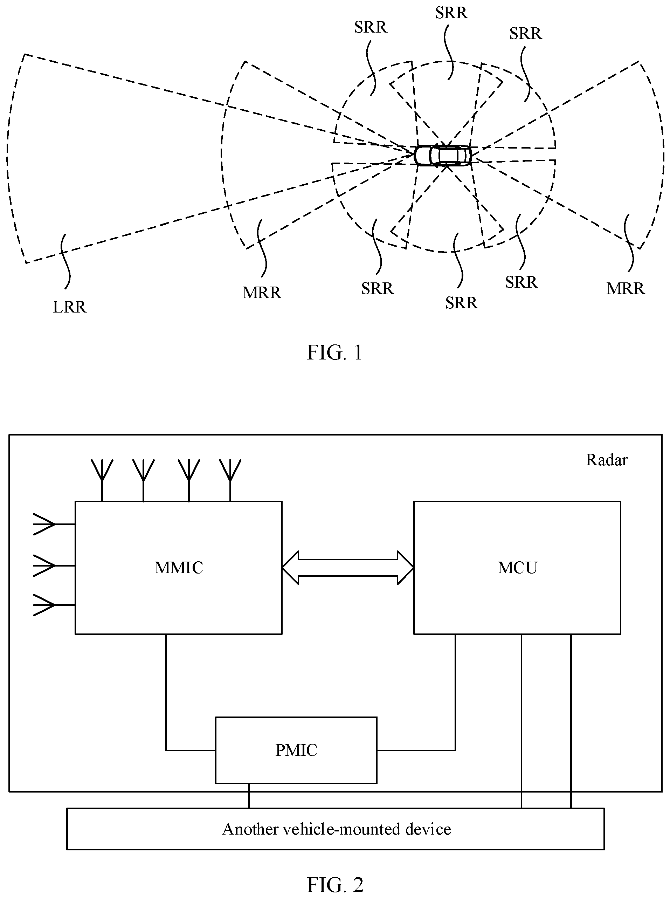

FIG. 1 is a diagram of radar deployment according to an embodiment of this application.

FIG. 1 shows possible mounting positions of several types of radars. The mounting positions are merely examples, and during actual use, more or fewer radars may be selected, and the types may also be adjusted.

As shown in FIG. 1, an LRR may be mounted in front of a vehicle body and serve as a forward radar; an MRR may be mounted in front of or behind the vehicle body and serve as a forward radar or a backward radar; and an SRR may be mounted on a side of the vehicle body or at four corners of the vehicle body and serve as a side radar or a corner radar. In addition, the MRR may alternatively be mounted on a side of the vehicle body or at four corners of the vehicle body, and the SRR may alternatively be mounted in front of or behind the vehicle body.

The radar may be classified based on a modulation manner (or a radiation manner) of an electromagnetic wave of the radar. The modulation manner of the electromagnetic wave of the radar includes a pulse manner and a continuous wave manner. Therefore, the radar may be classified into a pulse radar and a continuous wave radar. The continuous wave manner may be further classified into frequency shift keying (frequency shift keying, FSK), phase shift keying (phase shift keying, PSK), a constant-frequency/single-frequency continuous wave (continuous wave CW), a frequency modulated continuous wave (frequency modulated continuous wave, FMCW), multiple frequency shift keying (multiple frequency shift keying, MFSK), a phase modulated continuous wave (phase modulated continuous wave, PMCW), and the like. Featuring in multi-target detection, high resolution, and low costs, the FMCW manner has become a mainstream radar modulation manner.

FIG. 2 is a diagram of an architecture of a radar according to an embodiment of this application.

As shown in FIG. 2, the radar includes a monolithic microwave integrated circuit (monolithic microwave integrated circuit, MMIC), a microcontroller unit (microcontroller unit, MCU), and a power management integrated circuit (power management integrated circuit, PMIC). The MMIC may integrate a function of a radio frequency part, the MCU may integrate a function of a baseband part, for example, integrate a function of a signal processor, and further provide a communication interface for communicating with another vehicle-mounted device, and the PMIC is a chip that supplies power to a radar hardware system.

A millimeter-wave radar is one of core sensors for assisted driving, and needs to meet a series of technical specifications such as a detection distance and a vertical angle measurement range. A conventional vehicle-mounted millimeter-wave radar is mainly used for assisted driving in a driving mode. The driving mode means that a vehicle is in a road driving state, including driving forward, changing a lane, turning, or the like. The assisted driving in the driving mode may include blind spot vehicle detection and alarm, lane change assistance, adaptive cruise control, and the like. A detected target is mainly a vehicle.

With an increase in assisted driving application scenarios, a new requirement is imposed on the millimeter-wave radar. For example, an assisted driving requirement in a parking mode is imposed on the basis of the original assisted driving in the driving mode. The parking mode means that the vehicle is in a parking state, including searching for a parking space, parking into a parking space, parking out of a parking space, or the like. The assisted driving in the parking mode may include detecting a low-lying obstacle near the vehicle.

The driving mode and the parking mode have different requirements on technical specifications of the millimeter-wave radar. For example, a vertical angle measurement range required by the parking mode is greater than a vertical angle measurement range required by the driving mode, and the vertical angle measurement range is a maximum angle that can be measured in a vertical dimension. For example, in the driving mode, the vertical angle measurement range is between 18° and 30°, to meet vehicle detection. In the parking mode, the vertical angle measurement range is 80° or above, to meet detection of a low-lying obstacle near the vehicle.

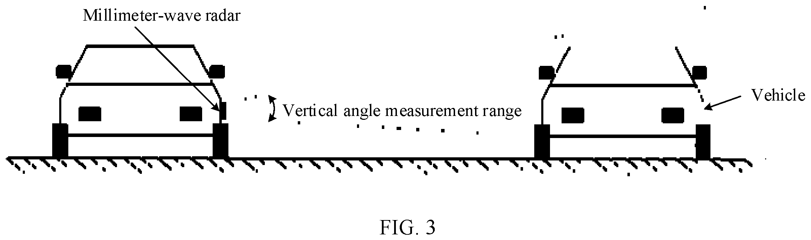

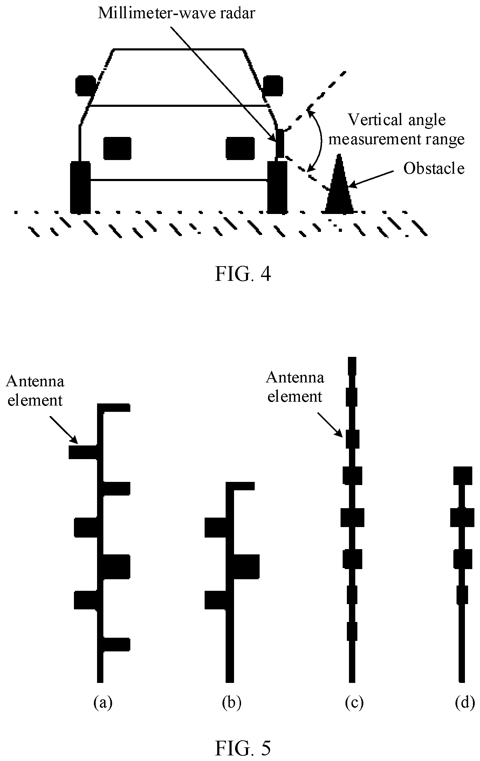

FIG. 3 is a diagram of a vertical angle measurement range in a driving mode according to an embodiment of this application. FIG. 4 is a diagram of a vertical angle measurement range in a parking mode according to an embodiment of this application. It can be learned by comparing FIG. 3 and FIG. 4 that the vertical angle measurement range in the parking mode is greater than the vertical angle measurement range in the driving mode.

In addition, a detection distance required by the parking mode may be less than a detection distance required by the driving mode. For example, the detection distance in the parking mode may be reduced to 1/2 or even lower of the detection distance in the driving mode.

The vehicle-mounted millimeter-wave radar usually uses an antenna array technology, and an antenna of the vehicle-mounted millimeter-wave radar may be a microstrip antenna or a waveguide antenna. When a spacing (denoted as dₐₙₜ) between two antennas in the vertical dimension in the antenna array satisfies the following condition, in principle, the antenna array can meet a measurement requirement in a vertical angle measurement range α. ${d}_{ant} \leq \frac{{λ}_{0}}{2 \times sin \frac{α}{2}}$

Herein, λ₀ is a wavelength at which a signal transmitted by the antenna is transmitted in the air.

Currently, after an antenna structure is designed, a vertical angle measurement range corresponding to the antenna structure is fixed. To obtain a larger or smaller vertical angle measurement range, the antenna structure needs to be adjusted or redesigned, in other words, currently, a same antenna structure cannot simultaneously meet measurement requirements in different vertical angle measurement ranges.

FIG. 5 is a diagram of a microstrip antenna. As shown in (a) and (c) in FIG. 5, the antenna has a large quantity of elements in a vertical dimension, so that a high gain and a small vertical angle measurement range (not greater than 18°) can be implemented. If a larger vertical angle measurement range needs to be obtained, the quantity of antenna elements in the vertical dimension needs to be reduced. As shown in (b) and (d) in FIG. 5, the antenna has four elements in the vertical dimension. Compared with that in (a) and (c) in FIG. 5, the antenna has fewer elements, so that the vertical angle measurement range can be expanded, but the gain is reduced accordingly.

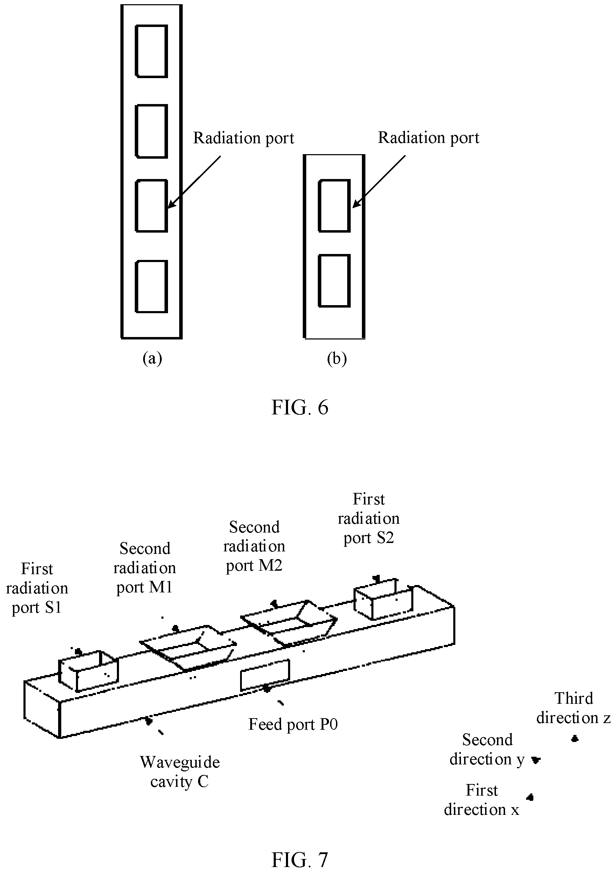

FIG. 6 is a diagram of a waveguide antenna. The waveguide antenna has a higher gain than the microstrip antenna. As shown in (a) in FIG. 6, the antenna has four radiation ports in a vertical dimension, which can meet a gain requirement required by a millimeter-wave radar. In addition, a vertical angle measurement range may reach 30°. If the vertical angle measurement range needs to be further expanded, a quantity of radiation ports in the vertical dimension needs to be reduced. As shown in (b) in FIG. 6, the antenna has two radiation ports in the vertical dimension. Compared with that in (a) in FIG. 6, the quantity of radiation ports is reduced, so that a larger vertical angle measurement range can be implemented, but the gain is also reduced.

Regardless of the microstrip antenna or the waveguide antenna, expanding the vertical angle measurement range by reducing the quantity of elements or the quantity of radiation ports causes a decrease in the antenna gain. Consequently, a detection distance of the millimeter-wave radar is reduced, and a detection distance requirement in a driving mode cannot be met. To meet detection requirements in both the driving mode and a parking mode, the following solutions are used in a related technology.

Solution 1: Two types of antennas are used inside one millimeter-wave radar. The two types of antennas have different structural designs, support different vertical angle measurement ranges, and respectively correspond to a driving mode and a parking mode. However, in this solution, when a quantity of transmit and receive channels of the millimeter-wave radar is limited, a detection distance of the millimeter-wave radar is reduced. If the detection distance is increased by increasing the quantity of transmit and receive channels of the millimeter-wave radar, a volume, complexity, and costs of the millimeter-wave radar are also increased.

Solution 2: Two types of millimeter-wave radars are mounted on an entire vehicle. The two types of millimeter-wave radars support different vertical angle measurement ranges, and respectively correspond to a driving mode and a parking mode. However, this solution increases mounting difficulty, and complexity and costs of the millimeter-wave radar and the entire vehicle are also increased.

In view of this, embodiments of this application provide a waveguide antenna, a detection method, and a related apparatus, and relate to the field of millimeter-wave radar technologies, to simultaneously meet detection requirements in different application scenarios without increasing complexity and costs of a hardware structure.

The following describes the waveguide antenna provided in embodiments of this application with reference to the accompanying drawings.

FIG. 7 is a diagram of a waveguide antenna according to an embodiment of this application.

As shown in FIG. 7, the waveguide antenna includes a waveguide cavity C, a feed port P0, and N first radiation ports.

Herein, N is an integer greater than or equal to 1. For example, in the waveguide antenna shown in FIG. 7, N is equal to 2, and the N first radiation ports include a first radiation port S1 and a first radiation port S2. It should be understood that N being equal to 2 herein is merely used as a possible example for description, and should not constitute a limitation on this embodiment of this application. In another example, N may alternatively be another integer greater than 1.

As shown in FIG. 7, a shape of the waveguide cavity C is a cuboid. Optionally, a right-angled edge of the cuboid may be designed as a circular arc for transition. It should be understood that the shape of the cuboid herein is merely used as a possible example for description, and should not constitute a limitation on this embodiment of this application. In another example, the waveguide cavity C may alternatively be a cavity in another shape.

As shown in FIG. 7, directions in which a length, a width, and a height of the waveguide cavity C are located are respectively denoted as a first direction x, a second direction y, and a third direction z, and two of the first direction x, the second direction y, and the third direction z are perpendicular to each other. A plane (denoted as an xy plane) formed by the first direction x and the second direction y is perpendicular to the third direction z, a plane (denoted as an xz plane) formed by the first direction x and the third direction z is perpendicular to the second direction y, and a plane (denoted as a yz plane) formed by the second direction y and the third direction z is perpendicular to the first direction x.

In a possible design, as shown in FIG. 7, the first radiation ports (S1 and S2) are disposed on a first surface (an upper surface in the figure) of the waveguide cavity C, the first radiation ports (S1 and S2) are arranged in the first direction x, and the feed port P0 is disposed on a second surface (a side surface in the figure) of the waveguide cavity C. The first surface is parallel to the xy plane, and the second surface is parallel to the xz plane. In this case, the second surface is adjacent to and perpendicular to the first surface. In another possible design, the feed port P0 may alternatively be disposed on a third surface (a lower surface in the figure) of the waveguide cavity C, and the third surface is parallel to the xy plane. In this case, the third surface is opposite to and parallel to the first surface.

In a possible design, the waveguide cavity C may be an air waveguide cavity, that is, there is air inside the waveguide cavity C. In another possible design, the waveguide cavity C may alternatively be a dielectric waveguide cavity, that is, the waveguide cavity C is filled with a proper medium. The medium herein is a medium used to transmit an electromagnetic wave signal. In still another possible design, the waveguide cavity C may alternatively be a gap waveguide (gap waveguide, GW) cavity.

The waveguide antenna is configured to operate in at least two operating frequency ranges. A signal input from the feed port P0 is transmitted through the waveguide cavity C and radiated through the first radiation ports (S1 and S2). Radiation energy of the first radiation ports (S1 and S2) varies in different operating frequency ranges.

Specifically, the electromagnetic wave signal is input from the feed port P0 to the waveguide cavity C, and the electromagnetic wave signal is transmitted in the waveguide cavity C and may be radiated through the first radiation ports (S1 and S2). The radiation energy of the first radiation ports (S1 and S2) is associated with the operating frequency range. The radiation energy of the first radiation ports (S1 and S2) varies in different operating frequency ranges. Therefore, a range (for example, a detection distance and a vertical angle measurement range) that can be detected by the radiation energy of the first radiation ports (S1 and S2) also varies.

In a possible case, when the waveguide antenna operates in a low operating frequency range, the radiation energy of the first radiation ports (S1 and S2) is high, and it may be considered that the first radiation ports (S1 and S2) can effectively radiate an electromagnetic wave signal. This can increase a gain of the waveguide antenna, and improve a concentration degree of radiation energy of the waveguide antenna, so that a large detection distance and a small vertical angle measurement range can be implemented.

In another possible case, when the waveguide antenna operates in a high operating frequency range, the radiation energy of the first radiation ports (S1 and S2) is low, and it may be considered that the first radiation ports (S1 and S2) cannot effectively radiate the electromagnetic wave signal. This reduces the gain of the waveguide antenna, and reduces the concentration degree of the radiation energy of the waveguide antenna, so that a small detection distance and a large vertical angle measurement range can be implemented.

In this embodiment of this application, different operating frequency ranges can be configured for the waveguide antenna, so that the radiation energy of the first radiation port in the waveguide antenna varies in different operating frequency ranges. Therefore, the radiation energy of the first radiation port can be changed by changing the operating frequency range of the waveguide antenna, to implement different detection ranges. In this way, the waveguide antenna of a same structure can operate in different operating frequency ranges to meet detection requirements in different application scenarios, eliminating the need to design different antenna structures to meet the detection requirements in different application scenarios, which reduces complexity and costs of a hardware structure.

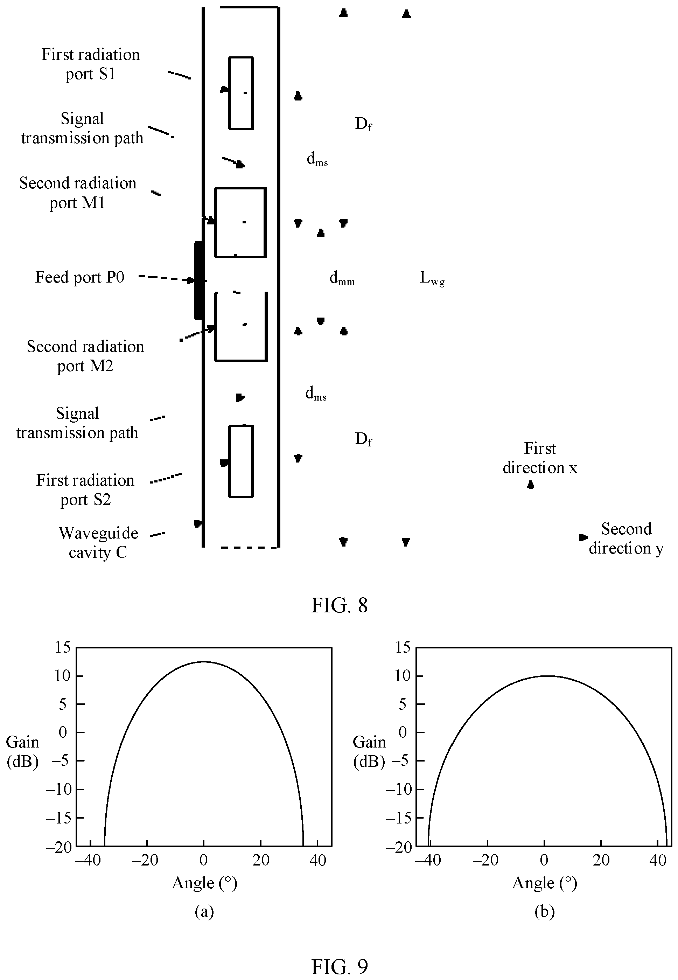

FIG. 8 is a planar diagram of a waveguide antenna according to an embodiment of this application. It may be understood that the waveguide antenna shown in FIG. 8 may be implemented as an independent embodiment. Alternatively, the waveguide antenna shown in FIG. 8 may be understood as a variant or a supplement to the waveguide antenna in FIG. 7, and in this case, FIG. 8 may be understood as a top view of the waveguide antenna shown in FIG. 7 in the third direction z.

As shown in FIG. 8, the waveguide antenna includes a waveguide cavity C, a feed port P0, and two first radiation ports (S1 and S2). The waveguide antenna is configured to operate in at least two operating frequency ranges. A signal input from the feed port P0 is transmitted through the waveguide cavity C and radiated through the first radiation ports (S1 and S2). Radiation energy of the first radiation ports (S1 and S2) varies in different operating frequency ranges.

In a possible embodiment, the at least two operating frequency ranges correspond to different vertical angle measurement ranges.

Because the radiation energy of the first radiation port in the waveguide antenna varies in different operating frequency ranges, the waveguide antenna has different characteristics when operating in different operating frequency ranges, and can adapt to different application scenarios. Therefore, different operating frequency ranges can correspond to different application scenarios (for example, a driving mode and a parking mode), to meet requirements in different vertical angle measurement ranges. In other words, different operating frequency ranges can correspond to different vertical angle measurement ranges.

For each of the at least two operating frequency ranges, a vertical angle measurement range corresponding to the operating frequency range is a vertical angle measurement range that can be implemented when the waveguide antenna operates in the operating frequency range.

The at least two operating frequency ranges correspond to different vertical angle measurement ranges, that is, when the waveguide antenna operates in different operating frequency ranges, different vertical angle measurement ranges can be implemented.

Optionally, the at least two operating frequency ranges include a first frequency range and a second frequency range, a maximum frequency in the first frequency range is less than a minimum frequency in the second frequency range, and a first vertical angle measurement range corresponding to the first frequency range is less than a second vertical angle measurement range corresponding to the second frequency range.

The maximum frequency in the first frequency range is less than the minimum frequency in the second frequency range. In other words, any frequency in the first frequency range is less than any frequency in the second frequency range. The first frequency range may be understood as a lower operating frequency range in the at least two operating frequency ranges. The second frequency range may be understood as a higher operating frequency range in the at least two operating frequency ranges.

The first vertical angle measurement range is a vertical angle measurement range that can be implemented when the waveguide antenna operates in the first frequency range. The second vertical angle measurement range is a vertical angle measurement range that can be implemented when the waveguide antenna operates in the second frequency range. The first vertical angle measurement range is less than the second vertical angle measurement range. In other words, when the waveguide antenna operates in the low operating frequency range (namely, the first frequency range), a small vertical angle measurement range can be implemented, and when the waveguide antenna operates in the high operating frequency range (namely, the second frequency range), a large vertical angle measurement range can be implemented.

For example, the waveguide antenna operates in a frequency band (for example, 76 GHz to 81 GHz) of a vehicle-mounted millimeter-wave radar, the first frequency range is 76 GHz to 77 GHz, the corresponding first vertical angle measurement range is 30°, the second frequency range is 79 GHz to 81 GHz, and the corresponding second vertical angle measurement range is 80°.

It should be understood that the operating frequency band of the waveguide antenna, division into the first frequency range and the second frequency range, and the corresponding first vertical angle measurement range and second vertical angle measurement range are not limited to the foregoing examples, and may be set based on an actual application scenario or a requirement. For example, the operating frequency band of the waveguide antenna may be extended to a frequency band other than 76 GHz to 81 GHz, for example, a 140 GHz frequency band that may be used for the vehicle-mounted millimeter-wave radar in the future. For another example, the first frequency range may be 76 GHz to 76.4 GHz, and the second frequency range may be 80 GHz to 81 GHz. For still another example, the first vertical angle measurement range may be 60°, and the second vertical angle measurement range may be 90°.

FIG. 9 is a diagram of comparison of vertical angle measurement ranges in a case in which a waveguide antenna operates in different operating frequency ranges according to an embodiment of this application. (a) in FIG. 9 corresponds to a first frequency range (76 GHz to 77 GHz), where a horizontal coordinate (Angle) indicates a vertical angle measurement range (namely, a first vertical angle measurement range) in a case in which the waveguide antenna operates in the first frequency range, and a vertical coordinate (Gain) indicates a gain (denoted as a first gain) in a case in which the waveguide antenna operates in the first frequency range. (b) in FIG. 9 corresponds to a second frequency range (79 GHz to 81 GHz), where a horizontal coordinate (Angle) indicates a vertical angle measurement range (namely, a second vertical angle measurement range) in a case in which the waveguide antenna operates in the second frequency range, and a vertical coordinate (Gain) indicates a gain (denoted as a second gain) in a case in which the waveguide antenna operates in the second frequency range. It can be learned from the figure that the second vertical angle measurement range (approximately 90°) is greater than the first vertical angle measurement range (approximately 60°), and there is a small difference between the second gain and the first gain.

In this embodiment of this application, when the waveguide antenna operates in different operating frequency ranges, different vertical angle measurement ranges can be implemented. Specifically, when the waveguide antenna operates in a low first frequency range, a small vertical angle measurement range can be implemented, and when the waveguide antenna operates in a high second frequency range, a large vertical angle measurement range can be implemented. In this way, the waveguide antenna of a same structure can operate in different operating frequency ranges to meet requirements in different vertical angle measurement ranges.

In a possible embodiment, the first frequency range corresponds to a driving mode, and the second frequency range corresponds to a parking mode.

The driving mode requires a small vertical angle measurement range. Therefore, the first frequency range may correspond to the driving mode. In other words, in the driving mode, the waveguide antenna may operate in the first frequency range, to implement the small vertical angle measurement range, so that a requirement of the driving mode on the vertical angle measurement range is met.

The parking mode requires a large vertical angle measurement range. Therefore, the second frequency range may correspond to the parking mode. In other words, in the parking mode, the waveguide antenna may operate in the second frequency range, to implement the large vertical angle measurement range, so that a requirement of the parking mode on the vertical angle measurement range is met.

In a possible implementation, a detection apparatus (for example, a millimeter-wave radar) including the waveguide antenna may identify a driving mode of a vehicle. For different driving modes, the waveguide antenna may be enabled to operate in different operating frequency ranges, to radiate different energy. Specifically, when the detection apparatus identifies that the driving mode of the vehicle is the driving mode, the waveguide antenna is enabled to operate in the first frequency range; or when the detection apparatus identifies that the driving mode of the vehicle is the parking mode, the waveguide antenna is enabled to operate in the second frequency range.

In this embodiment of this application, when the waveguide antenna operates in the first frequency range, the small vertical angle measurement range can be implemented, so that the requirement of the driving mode on the vertical angle measurement range can be met. When the waveguide antenna operates in the second frequency range, the large vertical angle measurement range can be implemented, so that the requirement of the parking mode on the vertical angle measurement range can be met. In this way, the waveguide antenna of the same structure can operate in different operating frequency ranges to meet detection requirements in different assisted driving application scenarios.

In a possible embodiment, a difference between the radiation energy of the first radiation port in different operating frequency ranges is greater than a first threshold.

The first threshold may be understood as a minimum radiation energy difference that is of the first radiation port in different operating frequency ranges and that is required to meet the requirements in different vertical angle measurement range when the waveguide antenna operates in different operating frequency ranges. Therefore, when the difference between the radiation energy of the first radiation port in different operating frequency ranges is greater than the first threshold, the requirements in different vertical angle measurement ranges can be met when the waveguide antenna operates in different operating frequency ranges.

It may be understood that a specific value of the first threshold may be set based on an actual application scenario or a requirement. This is not limited in this embodiment of this application.

In a possible embodiment, radiation energy of the first radiation port in the first frequency range is higher than radiation energy of the first radiation port in the second frequency range, and a difference between the radiation energy of the first radiation port in the first frequency range and the radiation energy of the first radiation port in the second frequency range is greater than the first threshold.

The first radiation ports (S1 and S2) are used as an example. When the waveguide antenna operates in the first frequency range, the radiation energy of the first radiation ports (S1 and S2) is high, and it may be considered that the first radiation ports (S1 and S2) can effectively radiate the electromagnetic wave signal. When the waveguide antenna operates in the second frequency range, the radiation energy of the first radiation ports (S1 and S2) is low, and it may be considered that the first radiation ports (S1 and S2) cannot effectively radiate the electromagnetic wave signal. The difference between the radiation energy of the first radiation ports (S1 and S2) in the first frequency range and the radiation energy of the first radiation ports (S1 and S2) in the second frequency range is greater than the first threshold, so that different vertical angle measurement ranges can be implemented when the waveguide antenna operates in the first frequency range and the second frequency range.

In this embodiment of this application, the radiation energy of the first radiation port in the first frequency range is higher than the radiation energy of the first radiation port in the second frequency range, and the difference between the radiation energy of the first radiation port in the first frequency range and the radiation energy of the first radiation port in the second frequency range is greater than the first threshold, so that the small vertical angle measurement range can be implemented when the waveguide antenna operates in the first frequency range, and the large vertical angle measurement range can be implemented when the waveguide antenna operates in the second frequency range, to meet the requirements in different vertical angle measurement ranges.

In a possible embodiment, the two first radiation ports (S1 and S2) are symmetrical along the feed port P0.

The two first radiation ports (S1 and S2) shown in FIG. 7 or FIG. 8 are used as an example. The first radiation port S1 and the first radiation port S2 are symmetrical along the feed port P0. The first radiation port S1 and the first radiation port S2 may be considered as a pair of first radiation ports symmetrical along the feed port P0. Specifically, a distance between the first radiation port S1 and the feed port P0 in the first direction x is equal to a distance between the first radiation port S2 and the feed port P0 in the first direction x.

Optionally, the first radiation port S1 and the first radiation port S2 use a same design. For example, designs such as shapes, sizes, and media of the first radiation port S1 and the first radiation port S2 are the same. The medium used by the first radiation port may be air or another medium that can be used to transmit the electromagnetic wave signal.

In this embodiment of this application, the first radiation ports are symmetrically disposed, so that each pair of first radiation ports symmetrical along the feed port can be equivalent, and waveforms radiated by the first radiation ports can be symmetrical. This facilitates mirrored mounting of the antenna and reduces mounting difficulty.

In a possible embodiment, a length of a resonant cavity of the first radiation port is related to the first frequency range.

The resonant cavity of the first radiation port is a resonant cavity required for an electromagnetic wave signal in the waveguide cavity to be effectively radiated through the first radiation port. To enable the first radiation port to effectively radiate the electromagnetic wave signal in the first frequency range, the length of the resonant cavity of the first radiation port can be designed based on the first frequency range, so that the length of the resonant cavity of the first radiation port is related to the first frequency range.

In this embodiment of this application, the length of the resonant cavity of the first radiation port is related to the first frequency range, so that the first radiation port can effectively radiate the electromagnetic wave signal in the first frequency range. This helps implement the small vertical angle measurement range when the waveguide antenna operates in the first frequency range.

In a possible embodiment, the length of the resonant cavity of the first radiation port is a waveguide propagation wavelength of a signal corresponding to an intermediate frequency in the first frequency range.

It is assumed that the first frequency range (denoted as f1) is [f₁ₘᵢₙ, f₁ₘₐₓ]. In this case, the intermediate frequency (denoted as f_{1mid}) in the first frequency range may be (f₁ₘᵢₙ+f₁ₘₐₓ)/2. The waveguide propagation wavelength (denoted as λ_{f1mid}) of the signal corresponding to the intermediate frequency f_{1mid} in the first frequency range is a wavelength at which an electromagnetic wave signal is propagated in the waveguide cavity when the waveguide antenna operates at the intermediate frequency f_{1mid} in the first frequency range.

For example, λ_{f1mid} may be calculated by using the following formula: ${λ}_{f 1 mid} = v / {f}_{1 mid}$

Herein, v indicates a propagation speed of the electromagnetic wave signal in the waveguide cavity.

In this embodiment of this application, the length of the resonant cavity of the first radiation port can be designed based on the waveguide propagation wavelength of the signal corresponding to the intermediate frequency in the first frequency range, so that the first radiation port can effectively radiate the electromagnetic wave signal in the first frequency range. This helps implement the small vertical angle measurement range when the waveguide antenna operates in the first frequency range.

In a possible embodiment, the waveguide antenna further includes K second radiation ports, and the second radiation ports are located between the feed port and the first radiation port.

K is an integer greater than or equal to 1. For example, in the waveguide antenna shown in FIG. 7 or FIG. 8, K is equal to 2, and the K second radiation ports include a second radiation port M1 and a second radiation port M2. It should be understood that K being equal to 2 herein is merely used as a possible example for description, and should not constitute a limitation on this embodiment of this application. In another example, K may alternatively be another integer greater than 1.

As shown in FIG. 7 or FIG. 8, the waveguide antenna includes four radiation ports, namely, two first radiation ports (S1 and S2) and two second radiation ports (M1 and M2). The second radiation port M1 is located between the feed port P0 and the first radiation port S1, and the second radiation port M2 is located between the feed port P0 and the first radiation port S2. It should be understood that, in another example, the waveguide antenna may alternatively include more radiation ports, for example, five or six radiation ports. When the waveguide antenna includes five radiation ports, a position of the feed port may be a position of an intermediate radiation port in the five radiation ports.

The waveguide antenna is configured to operate in the at least two operating frequency ranges. A signal input from the feed port P0 is transmitted through the waveguide cavity C and radiated through the first radiation ports (S1 and S2) and the second radiation ports (M1 and M2). The difference between the radiation energy of the first radiation ports (S1 and S2) in different operating frequency ranges is greater than the first threshold, and a difference between radiation energy of the second radiation ports (M1 and M2) in different operating frequency ranges is less than a second threshold.

The second threshold may be understood as a maximum radiation energy difference that is of the second radiation port in different operating frequency ranges and that is required to meet the requirements in different vertical angle measurement range when the waveguide antenna operates in different operating frequency ranges. Therefore, when the difference between the radiation energy of the second radiation port in different operating frequency ranges is less than the second threshold, the requirements in different vertical angle measurement ranges can be met when the waveguide antenna operates in different operating frequency ranges.

It may be understood that a specific value of the second threshold may be set based on an actual application scenario or a requirement. This is not limited in this embodiment of this application.

Optionally, the at least two operating frequency ranges include the first frequency range and the second frequency range, the difference between the radiation energy of the first radiation ports (S1 and S2) in the first frequency range and the radiation energy of the first radiation ports (S1 and S2) in the second frequency range is greater than the first threshold, and a difference between radiation energy of the second radiation ports (M1 and M2) in the first frequency range and radiation energy of the second radiation ports (M1 and M2) in the second frequency range is less than the second threshold.

Specifically, when the waveguide antenna operates in the first frequency range, both the first radiation ports (S1 and S2) and the second radiation ports (M1 and M2) can effectively radiate the electromagnetic wave signals. Therefore, the waveguide antenna can rely on the four radiation ports, namely, the first radiation ports (S1 and S2) and the second radiation ports (M1 and M2) to radiate the electromagnetic wave signals, so that the small vertical angle measurement range can be implemented. When the waveguide antenna operates in the second frequency range, the second radiation ports (M1 and M2) can still effectively radiate the electromagnetic wave signal, while the radiation energy of the first radiation ports (S1 and S2) is greatly reduced, and it may be considered that the first radiation ports (S1 and S2) cannot effectively radiate the electromagnetic wave signal. Therefore, the waveguide antenna mainly relies on the second radiation ports (M1 and M2) to radiate the electromagnetic wave signal, so that the large vertical angle measurement range can be implemented.

In this embodiment of this application, the radiation energy of the first radiation port in the first frequency range is higher than the radiation energy of the first radiation port in the second frequency range, the difference between the radiation energy of the first radiation port in the first frequency range and the radiation energy of the first radiation port in the second frequency range is greater than the first threshold, and the difference between the radiation energy of the second radiation port in the first frequency range and the radiation energy of the second radiation port in the second frequency range is less than the second threshold, so that the small vertical angle measurement range can be implemented when the waveguide antenna operates in the first frequency range, and the large vertical angle measurement range can be implemented when the waveguide antenna operates in the second frequency range, to meet the requirements in different vertical angle measurement ranges.

In a possible embodiment, the two second radiation ports (M1 and M2) are symmetrical along the feed port P0.

The two second radiation ports (M1 and M2) shown in FIG. 7 or FIG. 8 are used as an example. The second radiation port M1 and the second radiation port M2 are symmetrical along the feed port P0. The second radiation port M1 and the second radiation port M2 may be considered as a pair of second radiation ports symmetrical along the feed port P0. Specifically, a distance between the second radiation port M1 and the feed port P0 in the first direction x is equal to a distance between the second radiation port M2 and the feed port P0 in the first direction x.

Optionally, the second radiation port M1 and the second radiation port M2 use a same design. For example, designs such as shapes, sizes, and media of the second radiation port M1 and the second radiation port M2 are the same. The medium used by the second radiation port may be air or another medium that can be used to transmit the electromagnetic wave medium.

In this embodiment of this application, the second radiation ports are designed to be symmetrical, so that each pair of second radiation ports symmetrical along the feed port can be equivalent, and waveforms radiated by the second radiation ports can be symmetrical. This facilitates the mirrored mounting of the antenna and reduces the mounting difficulty.

In a possible embodiment, a distance between the two second radiation ports (M1 and M2) is related to the second frequency range and the second vertical angle measurement range.

The distance between the two second radiation ports (M1 and M2) is a distance that is between the second radiation ports and that is required for an electromagnetic wave signal in the waveguide cavity to be effectively radiated through the second radiation ports. To enable the second radiation port to effectively radiate the electromagnetic wave signal in both the first frequency range and the second frequency range and implement the second vertical angle measurement range in the second frequency range, the distance between the two second radiation ports (M1 and M2) can be designed based on the second frequency range and the second vertical angle measurement range, so that the distance between the two second radiation ports (M1 and M2) is related to the second frequency range and the second vertical angle measurement range.

Optionally, the distance between the two second radiation ports (M1 and M2) is a geometric center distance between the two second radiation ports (M1 and M2). For example, as shown in FIG. 8, the second radiation ports (M1 and M2) are rectangles, and the distance between the two second radiation ports (M1 and M2) is a distance (denoted as dₘₘ in the figure) between geometric centers of the two rectangles.

In this embodiment of this application, the distance between the two second radiation ports is related to the second frequency range and the second vertical angle measurement range, so that the second radiation port can effectively radiate the electromagnetic wave signal in both the first frequency range and the second frequency range. This helps implement the small vertical angle measurement range when the waveguide antenna operates in the first frequency range, and implement the large vertical angle measurement range when the waveguide antenna operates in the second frequency range.

In a possible embodiment, the distance dₘₘ between the two second radiation ports (M1 and M2) satisfies the following condition: ${d}_{mm} \leq \frac{{λ}_{max}}{2 \times sin \frac{θ}{2}}$

Herein, λₘₐₓ indicates an air propagation wavelength of a signal corresponding to a maximum frequency in the second frequency range, and θ indicates the second vertical angle measurement range.

It is assumed that the second frequency range (denoted as f2) is [f₂ₘᵢₙ, f₂ₘₐₓ]. In this case, the maximum frequency in the second frequency range is f₂ₘₐₓ. The air propagation wavelength λₘₐₓ of the signal corresponding to the maximum frequency f₂ₘₐₓ in the second frequency range is a wavelength at which the electromagnetic wave signal is propagated in the air when the waveguide antenna operates at the maximum frequency f₂ₘₐₓ in the second frequency range.

For example, λₘₐₓ may be calculated by using the following formula: ${λ}_{max} = c / {f}_{2 max}$

Herein, c indicates a propagation speed of the electromagnetic wave signal in the air.

In this embodiment of this application, the distance between the two second radiation ports can be designed based on the air propagation wavelength of the signal corresponding to the maximum frequency in the second frequency range and the second vertical angle measurement range, so that the second radiation port can effectively radiate the electromagnetic wave signal in both the first frequency range and the second frequency range. This helps implement the small vertical angle measurement range when the waveguide antenna operates in the first frequency range, and implement the large vertical angle measurement range when the waveguide antenna operates in the second frequency range.

It may be understood that dₘₘ further satisfies the following condition: ${d}_{mm} > \left(\frac{{J}_{M 1}}{2}+\frac{{J}_{M 2}}{2}\right)$

Herein, J_{M1} indicates a length of the second radiation port M1 in the first direction x, and J_{M2} indicates a length of the second radiation port M2 in the first direction x. When the second radiation port M1 and the second radiation port M2 use a same design, lengths (denoted as J_{M}) of the second radiation port M1 and the second radiation port M2 in the first direction x are the same. In this case, dₘₘ is greater than the length J_{M} of the second radiation ports (M1 and M2) in the first direction x.

In a possible embodiment, a distance between the first radiation port and the adjacent second radiation port satisfies the following condition: ${d}_{mm} < {d}_{ms} < {D}_{f}$

Herein, dₘₛ indicates the distance between the first radiation port and the adjacent second radiation port, and D_{f} indicates the length of the resonant cavity of the first radiation port.

As shown in FIG. 7 or FIG. 8, the first radiation port S1 is adjacent to the second radiation port M1, and the first radiation port S2 is adjacent to the second radiation port M2. The two first radiation ports (S1 and S2) use the same design and are symmetrical along the feed port P0, and the two second radiation ports (M1 and M2) use the same design and are symmetrical along the feed port P0. A distance between the first radiation port S1 and the second radiation port M1 is equal to a distance between the first radiation port S2 and the second radiation port M2, and both are indicated by dₘₛ. The length of the resonant cavity of the first radiation port S1 is equal to a length of a resonant cavity of the first radiation port S2, and both are indicated by D_{f}.

It may be understood that dₘₛ satisfies the following condition: ${d}_{ms} > \left(\frac{{J}_{M}}{2}+\frac{{J}_{S}}{2}\right)$

Herein, J_{M} indicates the length of the second radiation ports (M1 and M2) in the first direction x, and J_{S} indicates a length of the first radiation ports (S1 and S2) in the first direction x.

In this embodiment of this application, the distance between the first radiation port and the adjacent second radiation port can be designed based on the distance between the second radiation ports and the length of the resonant cavity of the first radiation port, so that the first radiation port can effectively radiate the electromagnetic wave signal in the first frequency range, but cannot effectively radiate the electromagnetic wave signal in the second frequency range. This helps implement the small vertical angle measurement range when the waveguide antenna operates in the first frequency range, and implement the large vertical angle measurement range when the waveguide antenna operates in the second frequency range.

In a possible embodiment, a length of the waveguide cavity satisfies the following condition: ${L}_{wg} = {d}_{mm} + 2 \times {D}_{f}$

Herein, L_{wg} indicates the length of the waveguide cavity.

For example, as shown in FIG. 8, the length L_{wg} of the waveguide cavity is equal to a sum of the distance (namely, dₘₘ) between the second radiation port M1 and the second radiation port M2, a distance from the second radiation port M1 to the top of the waveguide cavity (namely, the length D_{f} of the resonant cavity of the first radiation port S1), and a distance from the second radiation port M2 to the bottom of the waveguide cavity (namely, the length D_{f} of the resonant cavity of the first radiation port S2).

In this embodiment of this application, the length of the waveguide cavity can be designed based on the distance between the second radiation ports and the length of the resonant cavity of the first radiation port, so that the first radiation port can effectively radiate the electromagnetic wave signal in the first frequency range, but cannot effectively radiate the electromagnetic wave signal in the second frequency range, and the second radiation port can effectively radiate the electromagnetic wave signal in both the first frequency range and the second frequency range. This helps implement the small vertical angle measurement range when the waveguide antenna operates in the first frequency range, and implement the large vertical angle measurement range when the waveguide antenna operates in the second frequency range.

In a possible embodiment, an area of the second radiation port is greater than or equal to an area of the first radiation port.

For example, as shown in FIG. 7 or FIG. 8, the area of the first radiation port (S1 or S2) is an area of a cross section of the first radiation port (S1 or S2) in a direction parallel to the xy plane, and the area of the second radiation port (M1 or M2) is an area of a cross section of the second radiation port (M1 or M2) in a direction parallel to the xy plane. The area of the second radiation port (M1 or M2) is greater than or equal to the area of the first radiation port (S1 or S2). When the waveguide antenna operates in the first frequency range, both the first radiation ports (S1 and S2) and the second radiation ports (M1 and M2) can effectively radiate the electromagnetic wave signals, and radiation energy of the electromagnetic wave signal at the second radiation ports (M1 and M2) is stronger than radiation energy of the electromagnetic wave signal at the first radiation ports (S1 and S2), so that the small vertical angle measurement range can be implemented. When the waveguide antenna operates in the second frequency range, the first radiation ports (S1 and S2) cannot effectively radiate the electromagnetic wave signal, and the second radiation ports (M1 and M2) can still radiate the strong electromagnetic wave signal, so that the large vertical angle measurement range can be implemented.

In this embodiment of this application, the area of the second radiation port is greater than or equal to the area of the first radiation port, so that the radiation energy of the second radiation port can be greater than the radiation energy of the first radiation port. This helps implement different vertical angle measurement ranges when the waveguide antenna operates in different operating frequency ranges.

In addition, in a possible embodiment, a preparation method for a waveguide antenna is further provided. A specific procedure of the preparation method is as follows:
Method 1: A waveguide cavity, a feed port, and a radiation port may be obtained through plastic layered molding, a surface of each mold is then electroplated, and finally, the waveguide antenna including the waveguide cavity, the feed port, and the radiation port is obtained through layer brazing.

A plastic layered molding procedure is as follows: Plastic is first heated and melted in the bottom of an injection molding machine, then pushed by a screw of the injection molding machine, enters a mold cavity through an injection nozzle of the injection molding machine and a casting system of a mold, and is cooled and hardened to obtain the product.

Plastic electroplating is to cover a plastic surface with a metal layer and give a metal property. A specific process includes surface cleaning, solvent treatment, conditioning treatment, and sensitivity treatment.

Brazing is a welding method in which solder, whose melting point is lower than a melting point of a weldment, and a weldment are simultaneously heated to a melting temperature of the solder, and a gap of a solid workpiece is filled with a liquid brazing material to connect metals. During brazing, an oxidation film and oil stains on a contact surface of a base metal should be removed first, so that a capillary tube can play a role after the brazing material melts, to increase wettability and capillary fluidity of the brazing material.

Method 2: A waveguide cavity, a feed port, and a radiation port may be machined in a layered manner, and then the waveguide cavity, the feed port, and the first radiation port are formed through welding, to obtain the waveguide antenna.

According to the waveguide antenna obtained by using the foregoing preparation method, the radiation energy of the radiation port can be changed by changing the operating frequency range of the waveguide antenna, to implement different detection ranges. In this way, the waveguide antenna of the same structure can operate in different operating frequency ranges to meet detection requirements in different application scenarios, eliminating the need to design different antenna structures to meet the detection requirements in different application scenarios, which reduces the complexity and the costs of the hardware structure.

For example, the waveguide antenna shown in either FIG. 7 or FIG. 8 may be obtained by using the preparation method for the waveguide antenna. For structural characteristics and functional characteristics of the waveguide antenna, refer to the descriptions in FIG. 7 and FIG. 8. Details are not described herein again.

The following describes the detection apparatus in embodiments of this application.

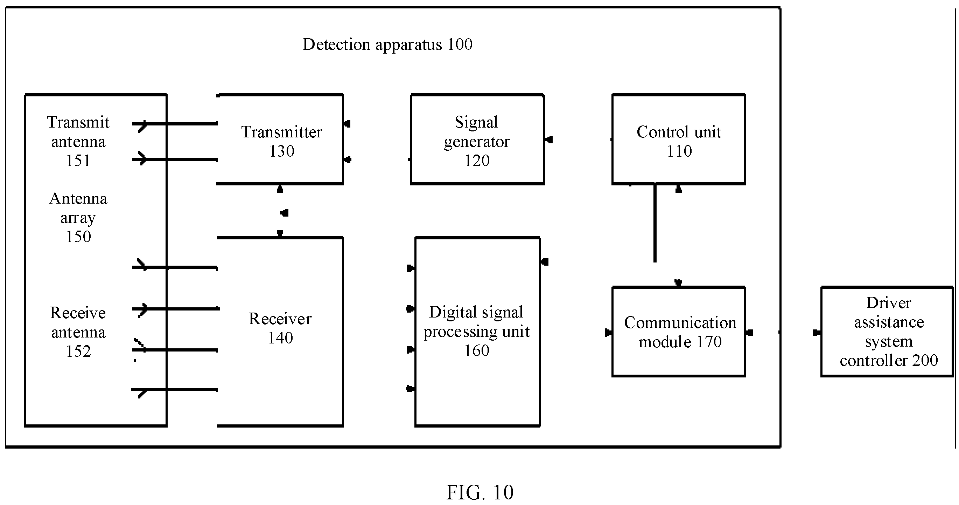

FIG. 10 is a diagram of a structure of a detection apparatus according to an embodiment of this application.

As shown in FIG. 10, the detection apparatus 100 includes a control unit 110, a signal generator 120, a transmitter 130, a receiver 140, an antenna array 150, a digital signal processing unit 160, and a communication module 170.

The antenna array 150 includes at least one transmit antenna 151 and at least one receive antenna 152. The transmit antenna 151 is connected to an output end of the transmitter 130, and the receive antenna 152 is connected to an input end of the receiver 140. Both the transmit antenna 151 and the receive antenna 152 may be the waveguide antenna described in the foregoing embodiments, for example, the waveguide antenna shown in FIG. 7 or FIG. 8.

The control unit 110 may be connected to the signal generator 120, the transmitter 130, the receiver 140, and the digital signal processing unit 160, and is configured to perform configuration, control, management, and the like on the signal generator 120, the transmitter 130, the receiver 140, and the digital signal processing unit 160.

The signal generator 120 may generate an electromagnetic wave signal (denoted as a measurement signal) based on an instruction of the control unit 110, and output the measurement signal to the transmitter 130. The transmitter 130 may perform processing such as amplification on the measurement signal, and output the measurement signal to the transmit antenna 151. The transmit antenna 151 is configured to radiate the measurement signal. The receive antenna 152 is configured to receive a reflected signal (denoted as a target signal) corresponding to the measurement signal, and output the reflected signal to the receiver 140. The receiver 140 may perform processing such as amplification, filtering, frequency conversion, and analog-to-digital conversion on the target signal, and outputs a processed target signal to the digital signal processing unit 160. The digital signal processing unit 160 may calculate target information such as a distance, a speed, and an angle of a target based on the processed target signal.

The communication module 170 is configured to complete information exchange such as instructions and data between the detection apparatus 100 and an external apparatus (for example, a driver assistance system controller 200). For example, the control unit 110 may receive an instruction of the driver assistance system controller 200 through the communication module 170. For another example, the digital signal processing unit 160 may report the target information to the driver assistance system controller 200 through the communication module 170, and the driver assistance system controller 200 may output a corresponding vehicle control instruction (for example, a brake instruction) to a vehicle system based on the target information.

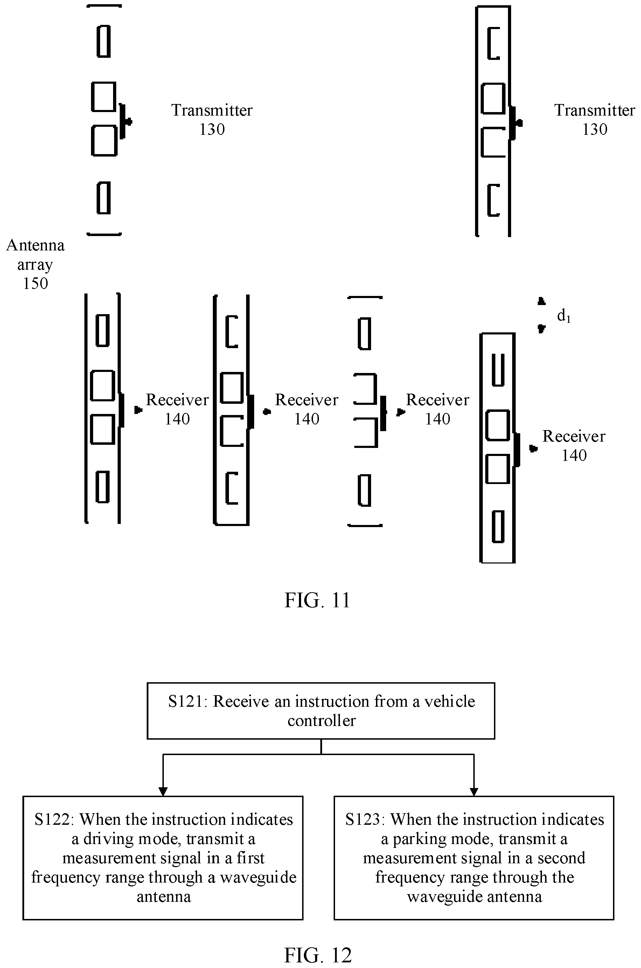

FIG. 11 is a diagram of a structure of an antenna array according to an embodiment of this application.

As shown in FIG. 11, the antenna array 150 includes two transmit antennas 151 and four receive antennas 152. The transmit antenna 151 is connected to a transmitter 130, and the receive antenna 152 is connected to a receiver 140. It should be understood that a quantity of transmit antennas and a quantity of receive antennas herein are merely used as possible examples for description, and should not constitute a limitation on this embodiment of this application. In another example, the antenna array may further include more or fewer transmit antennas and/or receive antennas.

The transmit antenna 151 may be the waveguide antenna shown in FIG. 7 or FIG. 8. The transmit antenna 151 includes a waveguide cavity C, a feed port P0, two first radiation ports (S1 and S2), and two second radiation ports (M1 and M2). A measurement signal output by the transmitter 130 is input to the waveguide cavity C through the feed port P0, and the measurement signal is transmitted through the waveguide cavity C and radiated through the first radiation ports (S1 and S2) and the second radiation ports (M1 and M2).

The receive antenna 152 may be the waveguide antenna shown in FIG. 7 or FIG. 8. The receive antenna 152 includes a waveguide cavity C, a feed port P0, two first radiation ports (S1 and S2), and two second radiation ports (M1 and M2). A target signal corresponding to the measurement signal is input to the waveguide cavity C through the first radiation ports (S1 and S2) and the second radiation ports (M1 and M2), and the target signal is transmitted through the waveguide cavity C and output to the receiver 140 through the feed port P0.

When the antenna array 150 operates in different operating frequency ranges, different vertical angle measurement ranges can be implemented. For example, two operating frequency ranges may be configured for the antenna array 150: a first frequency range [f₁ₘᵢₙ, f₁ₘₐₓ] and a second frequency range [f₂ₘᵢₙ, f₂ₘₐₓ], respectively, where f₁ₘₐₓ is less than f₂ₘᵢₙ. A vertical angle measurement range that can be implemented when the antenna array 150 operates in the first frequency range [f₁ₘᵢₙ, f₁ₘₐₓ] is δ, and a vertical angle measurement range that can be implemented when the antenna array 150 operates in the second frequency range [f₂ₘᵢₙ, f₂ₘₐₓ] is φ, where φ is greater than δ.

A vertical spacing (denoted as d₁) between at least two antennas in the antenna array 150 satisfies the following condition: ${d}_{1} \leq \frac{{λ}_{1}}{2 \times sin \frac{φ}{2}}$

Herein, d₁ may be a vertical spacing between two transmit antennas, or may be a vertical spacing between two receive antennas, or may be a vertical spacing between one transmit antenna and one receive antenna. In the antenna array shown in FIG. 11, d₁ is a vertical spacing between two receive antennas. λ₁ indicates a signal wavelength corresponding to a maximum operating frequency f₂ₘₐₓ of the antenna array, that is, a wavelength of an electromagnetic wave signal propagated in the air when the antenna array operates at the maximum operating frequency f₂ₘₐₓ. φ may also be understood as a maximum vertical angle measurement range supported by the antenna array.

It should be noted that, for detailed descriptions of the transmit antenna 151 and the receive antenna 152 in the antenna array 150, refer to the descriptions of the waveguide antenna in the foregoing embodiments. Details are not described herein again.

An embodiment of this application further provides a detection apparatus. The detection apparatus includes the waveguide antenna provided in the foregoing embodiments. For example, the detection apparatus may be a chip, a millimeter-wave radar, or a millimeter-wave radar system.

The following describes the detection method in embodiments of this application.

The detection method includes: transmitting a measurement signal through a waveguide antenna. The waveguide antenna is the waveguide antenna described in the foregoing embodiments, for example, the waveguide antenna shown in FIG. 7 or FIG. 8. Details are not described herein again.

When the waveguide antenna operates in different operating frequency ranges, different detection ranges can be implemented based on the measurement signal transmitted by the waveguide antenna. For example, when the waveguide antenna operates in a low frequency range, a small vertical angle measurement range can be implemented based on the measurement signal transmitted by the waveguide antenna. When the waveguide antenna operates in a high frequency range, a large vertical angle measurement range can be implemented based on the measurement signal transmitted by the waveguide antenna.

In this embodiment of this application, different operating frequency ranges can be configured for the waveguide antenna, and different detection ranges are implemented by changing the operating frequency range of the waveguide antenna. In this way, the waveguide antenna of a same structure can operate in different operating frequency ranges to meet detection requirements in different application scenarios, eliminating the need to design different antenna structures to meet the detection requirements in different application scenarios, which reduces complexity and costs of a hardware structure.

FIG. 12 is a schematic flowchart of a detection method according to an embodiment of this application. For example, the detection method may be applied to the detection apparatus 100 shown in FIG. 10.

As shown in FIG. 12, the detection method may include but is not limited to the following step S121 to step S123.

S121: Receive an instruction from a vehicle controller.

The instruction indicates a vehicle operating mode. Optionally, the vehicle operating mode includes a driving mode and a parking mode. Specifically, the vehicle controller sends an instruction to the detection apparatus, and the detection apparatus may determine, based on the instruction, whether a vehicle is in the driving mode or the parking mode.

S122: When the instruction indicates the driving mode, transmit a measurement signal in a first frequency range through a waveguide antenna.

Specifically, when the instruction indicates the driving mode, the detection apparatus operates in the first frequency range, generates the measurement signal in the first frequency range through a signal generator, and transmits the measurement signal in the first frequency range through the waveguide antenna. Then, a first reflected signal corresponding to the measurement signal in the first frequency range is received through the waveguide antenna, and the first reflected signal is processed through a digital signal processing unit, to obtain target information in a first vertical angle measurement range, and the target information is returned to the vehicle controller.

S123: When the instruction indicates the parking mode, transmit a measurement signal in a second frequency range through the waveguide antenna.

Specifically, when the instruction indicates the parking mode, the detection apparatus operates in the second frequency range, generates the measurement signal in the second frequency range through the signal generator, and transmits the measurement signal in the second frequency range through the waveguide antenna. Then, a second reflected signal corresponding to the measurement signal in the second frequency range is received through the waveguide antenna, and the second reflected signal is processed through the digital signal processing unit, to obtain target information in a second vertical angle measurement range, and the target information is returned to the vehicle controller.

In this embodiment of this application, the detection apparatus can determine the operating frequency range based on the instruction of the vehicle controller. When the instruction indicates the driving mode, the detection apparatus operates in the first frequency range, to implement a small vertical angle measurement range, so that a requirement of the driving mode on the vertical angle measurement range is met. When the instruction indicates the parking mode, the detection apparatus operates in the second frequency range, to implement a large vertical angle measurement range, so that a requirement of the parking mode on the vertical angle measurement range is met. In this way, detection requirements in different assisted driving application scenarios can be flexibly responded to.

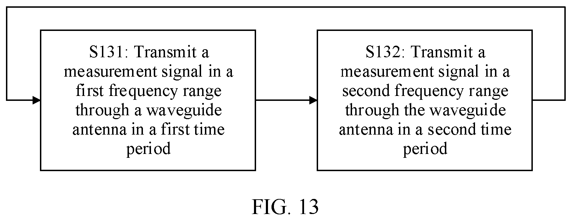

FIG. 13 is a schematic flowchart of another detection method according to an embodiment of this application. For example, the detection method may be applied to the detection apparatus 100 shown in FIG. 10.

As shown in FIG. 13, the detection method may include but is not limited to the following step S131 and step S132.

S131: Transmit a measurement signal in a first frequency range through a waveguide antenna in a first time period.

S132: Transmit a measurement signal in a second frequency range through the waveguide antenna in a second time period.

The first time period and the second time period are two time periods that are periodically and alternately cyclic. The detection apparatus operates in the first frequency range in the first time period, and the detection apparatus operates in the second frequency range in the second time period. In other words, the detection apparatus can automatically switch the operating frequency range. For example, the detection apparatus automatically switches to the second frequency range after operating in the first frequency range for a time period, and automatically switches to the first frequency range after operating in the second frequency range for a time period. The process is repeated.

Specifically, when operating in the first frequency range, the detection apparatus generates the measurement signal in the first frequency range through a signal generator, and transmits the measurement signal in the first frequency range through the waveguide antenna. Then, a first reflected signal corresponding to the measurement signal in the first frequency range is received through the waveguide antenna, and the first reflected signal is processed through a digital signal processing unit, to obtain target information in a first vertical angle measurement range, and the target information is returned to a vehicle controller.

When operating in the second frequency range, the detection apparatus generates the measurement signal in the second frequency range through the signal generator, and transmits the measurement signal in the second frequency range through the waveguide antenna. Then, a second reflected signal corresponding to the measurement signal in the second frequency range is received through the waveguide antenna, and the second reflected signal is processed through the digital signal processing unit, to obtain target information in a second vertical angle measurement range, and the target information is returned to the vehicle controller.

In this embodiment of this application, the detection apparatus can periodically switch the operating frequency range. When the detection apparatus operates in the first frequency range, a small vertical angle measurement range can be implemented. When the detection apparatus operates in the second frequency range, a large vertical angle measurement range can be implemented. In this way, detection can be actively performed in different vertical angle measurement ranges, to help improve comprehensiveness of detection.

An embodiment of this application further provides a detection apparatus. The detection apparatus includes at least one processor and a communication interface. The communication interface is configured to provide instructions or data input and/or output for the at least one processor, and the at least one processor is configured to perform the method shown in the foregoing method embodiments. For example, the detection apparatus may be a chip, a millimeter-wave radar, or a millimeter-wave radar system.

An embodiment of this application further provides a terminal device. The terminal device includes the waveguide antenna or the detection apparatus provided in the foregoing embodiments. For example, the terminal device may be a means of transportation, for example, a means of transportation used in any possible scenario, for example, a vehicle, a truck, aircraft, an uncrewed aerial vehicle, a slow transport vehicle, a spacecraft, or a ship, or may be any device that can carry a millimeter-wave detection apparatus, for example, a surveying and mapping device. One or more detection apparatuses provided in this application may be deployed on the terminal device.

An embodiment of this application further provides a vehicle. The vehicle includes the waveguide antenna, the detection apparatus, or the terminal device provided in the foregoing embodiments.

An embodiment of this application further provides a computer-readable storage medium. The computer-readable storage medium stores a computer program or instructions, and when the computer program or the instructions are executed, the method shown in the foregoing method embodiments can be implemented.

This application further provides a computer program product. The computer program product includes a computer program or instructions, and when the computer program or the instructions are executed, the method shown in the foregoing method embodiments can be implemented.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A waveguide antenna, comprising:
a waveguide cavity, a feed port, and a first radiation port, wherein
the waveguide antenna is configured to operate in at least two operating frequency ranges;
a signal input from the feed port is transmitted through the waveguide cavity and radiated through the first radiation port; and
radiation energy of the first radiation port varies in different operating frequency ranges.

2. The waveguide antenna according to claim 1, wherein the waveguide antenna comprises at least two first radiation ports that are symmetrical along the feed port.

3. The waveguide antenna according to claim 1 or 2, wherein the at least two operating frequency ranges correspond to different vertical angle measurement ranges; and
the at least two operating frequency ranges comprise a first frequency range and a second frequency range, a maximum frequency in the first frequency range is less than a minimum frequency in the second frequency range, and a first vertical angle measurement range corresponding to the first frequency range is less than a second vertical angle measurement range corresponding to the second frequency range.

4. The waveguide antenna according to claim 3, wherein the first frequency range corresponds to a driving mode, and the second frequency range corresponds to a parking mode.

5. The waveguide antenna according to claim 3 or 4, wherein radiation energy of the first radiation port in the first frequency range is higher than radiation energy of the first radiation port in the second frequency range, and a difference between the radiation energy of the first radiation port in the first frequency range and the radiation energy of the first radiation port in the second frequency range is greater than a first threshold.

6. The waveguide antenna according to claim 5, wherein a length of a resonant cavity of the first radiation port is related to the first frequency range.

7. The waveguide antenna according to claim 6, wherein the length of the resonant cavity is a waveguide propagation wavelength of a signal corresponding to an intermediate frequency in the first frequency range.

8. The waveguide antenna according to any one of claims 3 to 7, wherein the waveguide antenna further comprises a second radiation port, the second radiation port is located between the feed port and the first radiation port, and a difference between radiation energy of the second radiation port in the first frequency range and radiation energy of the second radiation port in the second frequency range is less than a second threshold.

9. The waveguide antenna according to claim 8, wherein the waveguide antenna comprises at least two second radiation ports that are symmetrical along the feed port.

10. The waveguide antenna according to claim 9, wherein the waveguide antenna comprises two second radiation ports that are symmetrical along the feed port, and a distance between the two second radiation ports is related to the second frequency range and the second vertical angle measurement range.

11. The waveguide antenna according to claim 10, wherein the distance between the two second radiation ports satisfies the following condition: ${d}_{mm} \leq \frac{{λ}_{max}}{2 \times sin \frac{θ}{2}} ,$ wherein
dₘₘ indicates the distance between the two second radiation ports, λₘₐₓ indicates an air propagation wavelength of a signal corresponding to a maximum frequency in the second frequency range, and θ indicates the second vertical angle measurement range.

12. The waveguide antenna according to claim 10 or 11, wherein the waveguide antenna comprises two first radiation ports that are symmetrical along the feed port, and a distance between the first radiation port and the adjacent second radiation port satisfies the following condition: ${d}_{mm} < {d}_{ms} < {D}_{f} ,$ wherein
dₘₛ indicates the distance between the first radiation port and the adjacent second radiation port, dₘₘ indicates the distance between the two second radiation ports, and D_{f} indicates the length of the resonant cavity of the first radiation port.

13. The waveguide antenna according to claim 12, wherein a length of the waveguide cavity satisfies the following condition: ${L}_{wg} = {d}_{mm} + 2 \times {D}_{f} ,$ wherein
L_{wg} indicates the length of the waveguide cavity.

14. The waveguide antenna according to any one of claims 8 to 13, wherein an area of the second radiation port is greater than or equal to an area of the first radiation port.

15. A detection apparatus, wherein the detection apparatus comprises the waveguide antenna according to any one of claims 1 to 14.

16. A detection method, wherein the method comprises:
transmitting a measurement signal through a waveguide antenna, wherein
the waveguide antenna comprises a waveguide cavity, a feed port, and a first radiation port, the waveguide antenna is configured to operate in at least two operating frequency ranges, the measurement signal is input from the feed port to the waveguide cavity, transmitted through the waveguide cavity, and radiated through the first radiation port, and radiation energy of the first radiation port varies in different operating frequency ranges.

17. The method according to claim 16, wherein the at least two operating frequency ranges correspond to different vertical angle measurement ranges; and
the at least two operating frequency ranges comprise a first frequency range and a second frequency range, a maximum frequency in the first frequency range is less than a minimum frequency in the second frequency range, and a first vertical angle measurement range corresponding to the first frequency range is less than a second vertical angle measurement range corresponding to the second frequency range.

18. The method according to claim 17, wherein before transmitting the measurement signal through the waveguide antenna, the method further comprises:
receiving an instruction from a vehicle controller, wherein the instruction indicates a vehicle operating mode; and
transmitting the measurement signal through the waveguide antenna comprises:
when the vehicle operating mode is a driving mode, transmitting a measurement signal in the first frequency range through the waveguide antenna; or
when the vehicle operating mode is a parking mode, transmitting a measurement signal in the second frequency range through the waveguide antenna.

19. The method according to claim 17, wherein the waveguide antenna operates in the first frequency range in a first time period, and operates in the second frequency range in a second time period, and the first time period and the second time period are two time periods that are periodically and alternately cyclic.

20. A detection apparatus, wherein the detection apparatus comprises at least one processor and a communication interface, the communication interface is configured to provide instructions or data input and/or output for the at least one processor, and the at least one processor is configured to perform the method according to any one of claims 16 to 19.

21. A terminal device, wherein the terminal device comprises the waveguide antenna according to any one of claims 1 to 14, the detection apparatus according to claim 15, or the detection apparatus according to claim 20.

22. A vehicle, wherein the vehicle comprises the waveguide antenna according to any one of claims 1 to 14, the detection apparatus according to claim 15, the detection apparatus according to claim 20, or the terminal device according to claim 21.

23. A computer-readable storage medium, wherein the computer-readable storage medium stores a computer program or instructions, and when the computer program or the instructions are executed, the method according to any one of claims 16 to 19 is implemented.
